(19) Europäisches Patentamt

European Patent Office

Office européen des brevets

(11) **EP 4 336 413 A1**

(12) # EUROPEAN PATENT APPLICATION

(43) Date of publication:
**13.03.2024   Bulletin 2024/11**

(21) Application number: **23192307.9**

(22) Date of filing: **21.08.2023**

(51) International Patent Classification (IPC):
**G06N 3/0895** (2023.01)     **G06N 3/098** (2023.01)

(52) Cooperative Patent Classification (CPC):
**G06N 3/098; G06N 3/0895;** G06N 3/044;
G06N 3/0455; G06N 3/0464; G06N 3/096

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022   IN 202221050218**

(71) Applicant: **Tata Consultancy Services Limited
Maharashtra (IN)**

(72) Inventors:
• **MALAVIYA, SHUBHAM MUKESHBHAI**
  **411013 Pune - Maharashtra (IN)**
• **SHUKLA, MANISH**
  **411013 Pune-Maharashtra (IN)**
• **LODHA, SACHIN PREMSUKH**
  **411013 Pune-Maharashtra (IN)**

(74) Representative: **Goddar, Heinz J.
Boehmert & Boehmert
Anwaltspartnerschaft mbB
Pettenkoferstrasse 22
80336 München (DE)**

(54) **SYSTEM AND METHOD FOR CLASSIFICATION OF SENSITIVE DATA USING FEDERATED SEMI-SUPERVISED LEARNING**

(57)     This disclosure relates generally to system and method for classification of sensitive date using federated semi-supervised learning. Federated learning has emerged as a privacy-preserving technique to learn one or more machine learning (ML) models without requiring users to share their data. In federated learning, data distribution among clients is imbalanced resulting with limited data in some clients. The method includes extracting a training dataset from one or more data sources and preprocessing the training dataset into a machine readable form based on associated data type. Further, a federated semi-supervised learning model is iteratively trained based on a model contrastive and distillation learning to classify sensitive data from the unlabeled dataset. Then, sensitive data from a user query is received as input which are classified using the federated semi-supervised learning model.

300

extract a training dataset from one or more data sources and pre-processing the training dataset into a machine readable form based on associated data type, wherein the training dataset comprises a labeled dataset and an unlabeled dataset

302

iteratively train a federated semi-supervised learning model based on model contrastive and distillation learning to classify sensitive data from the unlabeled dataset, wherein the federated semi-supervised learning model comprises a server and a set of participating clients

304

classify sensitive data from a user query received as input using the federated semi-supervised learning model and reclassify the sensitive data from the user query based on a feedback provided by the user if the data classification is erroneous.

306

**FIG.3**

**Description**

CROSS-REFERENCE TO RELATED APPLICATIONS AND PRIORITY

The present application claims priority to Indian application no. 202221050218, filed on September 02, 2022.

TECHNICAL FIELD

The disclosure herein generally relates to classification of sensitive data, and, more particularly, to system and method for classification of sensitive data using federated semi-supervised learning.

BACKGROUND

Security classification of data is a complex task and depends on the context under which the data is shared, used, and processed. Such classification is usually derived from the data, and not intuitive to the user working on that data, thus dictating the requirement for an automated security classification tool. All sensitive documents have same architecture and technology stack, from a security classification perspective, and these are entirely different as one of them is customer-confidential and the other is a public document. For an enterprise, it is important that they safeguard the customer-confidential data as any breach may lead to a violation of the non-disclosure agreement thus resulting in monetary and reputation loss.

Deep learning has widespread applications in various fields, such as entertainment, visual recognition, language understanding, autonomous vehicles, and healthcare. Human level performance in such applications are due to the availability of a large amount of data. However, getting a large amount of data could be difficult and may not always be possible. It is primarily due to end user data privacy concerns and geography based data protection regulations that impose strict rules on how data is stored, shared, and used. Privacy concerns lead to creation of data in silos at end-user devices. Such an accumulation of data is not conducive to conventional deep learning techniques that require training data at a central location and with full access. However, keeping data in a central place has the inherent risk of data being compromised and misused.

SUMMARY

Embodiments of the present disclosure present technological improvements as solutions to one or more of the above-mentioned technical problems recognized by the inventors in conventional systems. For example, in one embodiment, a system for classification of sensitive data using federated semi-supervised learning is provided. The system includes extracting a training dataset from one or more data sources and the training dataset are pre-processed into a machine readable form based on associated data type. The training dataset comprises a labeled dataset and an unlabeled dataset. Further, iteratively a federated semi-supervised learning model is trained based on model contrastive and distillation learning to classify sensitive data from the unlabeled dataset. The federated semi-supervised learning model comprises a server and a set of participating clients. The federated semi-supervised learning model is trained by fetching a federated learning plan comprising a first set of distinctive attributes corresponding to the set of local models and a second set of distinctive attributes corresponding to the global model. Each local model and the global model includes at least one of a projection layer, a classification layer, and a base encoder. Further, the set of local models are trained at the set of participating clients with respective unlabeled dataset by using the first set of distinctive attributes associated with the federated learning plan and communicating the plurality of trained local models to the server. Then, the global model is trained with the set of local models of each participating client with respective labeled dataset on the server by using the second set of distinctive attributes associated with the federated learning plan and communicating the trained global model with each participating client. Further, the system classifies sensitive data from a user query received as input using the federated semi-supervised learning model and reclassify the sensitive data from the user query based on a feedback provided by the user if the data classification is erroneous.

In another aspect, a method for classification of sensitive data using federated semi-supervised learning is provided. The method includes extracting a training dataset from one or more data sources and the training dataset are pre-processed into a machine readable form based on associated data type. The training dataset comprises a labeled dataset and an unlabeled dataset. Further, iteratively a federated semi-supervised learning model is trained based on model contrastive and distillation learning to classify sensitive data from the unlabeled dataset. The federated semi-supervised learning model comprises a server and a set of participating clients. The federated semi-supervised learning model is trained by fetching a federated learning plan comprising a first set of distinctive attributes corresponding to the set of local models and a second set of distinctive attributes corresponding to the global model. Each local model and the global model includes at least one of a projection layer, a classification layer, and a base encoder. Further, the set of local models are trained at the set of participating clients with respective unlabeled dataset by using the first set of distinctive attributes associated with the federated learning plan and communicating the plurality of trained local models to the server. Then, the global model is trained with the set of local models of each participating client with respective labeled dataset on the server by using the second set of distinctive attributes associated with the federated learning plan and communicating the trained global model with each participating client. Further, the method classifies sensitive data from a user query received as input using the federated semi-supervised learning model and reclassify the sensitive data from the user query based on a feedback provided by the user if the data classification is erroneous.

In yet another aspect, a non-transitory computer readable medium for extracting a training dataset from one or more data sources and the training dataset are pre-processed into a machine readable form based on associated data type. The training dataset comprises a labeled dataset and an unlabeled dataset. Further, iteratively a federated semi-supervised learning model is trained based on model contrastive and distillation learning to classify sensitive data from the unlabeled dataset. The federated semi-supervised learning model comprises a server and a set of participating clients. The federated semi-supervised learning model is trained by fetching a federated learning plan comprising a first set of distinctive attributes corresponding to the set of local models and a second set of distinctive attributes corresponding to the global model. Each local model and the global model includes at least one of a projection layer, a classification layer, and a base encoder. Further, the set of local models are trained at the set of participating clients with respective unlabeled dataset by using the first set of distinctive attributes associated with the federated learning plan and communicating the plurality of trained local models to the server. Then, the global model is trained with the set of local models of each participating client with respective labeled dataset on the server by using the second set of distinctive attributes associated with the federated learning plan and communicating the trained global model with each participating client. Further, the method classifies sensitive data from a user query received as input using the federated semi-supervised learning model and reclassify the sensitive data from the user query based on a feedback provided by the user if the data classification is erroneous.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG.1 illustrates an exemplary block diagram of a system (may be alternatively referred as a federated semi-supervised learning based sensitive data classification system) to classify sensitive data, in accordance with some embodiments of the present disclosure.

FIG.2A and FIG.2B illustrates an exemplary client-server architecture to classify sensitive data from the user query with feedback mechanism using the federated learning based sensitive data classification framework, in accordance with some embodiments of the present disclosure.

FIG.3 illustrates an exemplary flow diagram of a method to classify sensitive data from the user query, in accordance with some embodiments of the present disclosure.

FIG.4 illustrates an exemplary enterprise scenario having labels at server using the system of FIG.1, according to some embodiments of the present disclosure.

FIG.5A through FIG.5C illustrate an identical data distribution (IID) and non-independent identical data distribution from a Fashion-modified national institute standard technology (MNIST) dataset across ten clients with different values of alpha using the system of FIG. 1, according to some embodiments of the present disclosure.

FIG.6A through FIG.6O illustrates graphical representation of accuracy between the sensitive data classification framework and conventional datasets using the system of FIG.1, according to some embodiments of the present disclosure.

FIG.7A through FIG.7D illustrates a global model representation for local model training performed with different loss functions using the system of FIG. 1, according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments herein provide a method and system for classification of sensitive data using federated semi-supervised learning. The system may be alternatively referred as a sensitive data classification system 100. Federated learning has emerged as a privacy-preserving technique to learn one or more machine learning (ML) models without requiring users to share their data. Existing techniques in federated semi-supervised learning (FSSL) requires data augmentation to train one or more machine learning model training. However, data augmentation is not well defined for prevalent domains like text and graphs. Moreover, non-independent and identically distributed (non-IID) data across users is a significant challenge in federated learning.

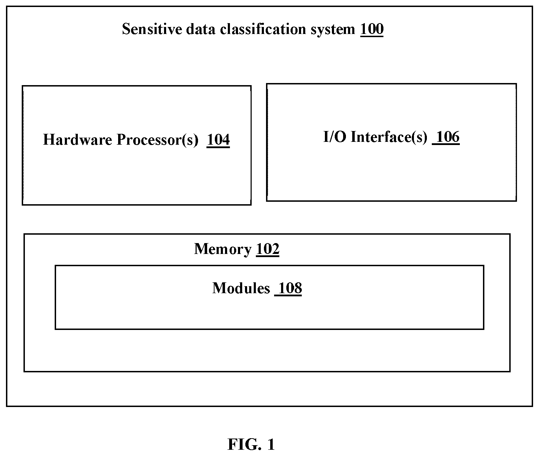

The method of the present disclosure provides technical solution where users do not have domain expertise or incentives to label data on their device, and where the server has limited access to some labeled data that is annotated by experts using a Federated Semi-Supervised Learning (FSSL) based sensitive data classification system. Although consistency regularization shows good performance in the federated semi-supervised learning (FSSL) for the vision domain, it requires data augmentation to be well defined. However, in the text domain, data augmentation is not so straightforward, and changing few words can impact the meaning of sentence. The method implemented by the present disclosure addresses the problem of data augmentation in FSSL with the data augmentation-free semi-supervised federated learning approach. The method implemented by the present disclosure employs a model contrastive loss and a distillation loss on the unlabeled dataset to learn generalized representation and supervised cross-entropy loss on the server side for supervised learning. The system 100 is a data augmentation-free framework for federated semi-supervised learning that learns data representation based on computing a model contrastive loss and a distillation loss while training a set of local models. The method implemented by the present disclosure and its systems described herein are based on model contrastive and distillation learning which does not require data augmentation, thus making it easy to adapt to different domains. The method is further evaluated on image and text datasets to show the robustness towards non-IID data. The results have been validated by varying data imbalance across users and the number of labeled instances on the server. The disclosed system is further explained with the method as described in conjunction with FIG. 1 to FIG.7D below.

Referring now to the drawings, and more particularly to FIG. 1 through FIG.7D, where similar reference characters denote corresponding features consistently throughout the figures, there are shown preferred embodiments and these embodiments are described in the context of the following exemplary system and/or method.

FIG.1 illustrates an exemplary block diagram of a system (may be alternatively referred as a federated semi-supervised learning based sensitive data classification system) to classify sensitive data, in accordance with some embodiments of the present disclosure. In an embodiment, the batch processing system 100 includes processor (s) 104, communication interface (s), alternatively referred as or input/output (I/O) interface(s) 106, and one or more data storage devices or memory 102 operatively coupled to the processor (s) 104. The system 100, with the processor(s) is configured to execute functions of one or more functional blocks of the system 100.

Referring to the components of the system 100, in an embodiment, the processor (s) 104 can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the processor(s) 104 is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

The I/O interface(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface (s) 106 can include one or more ports for connecting a number of devices (nodes) of the system 100 to one another or to another server.

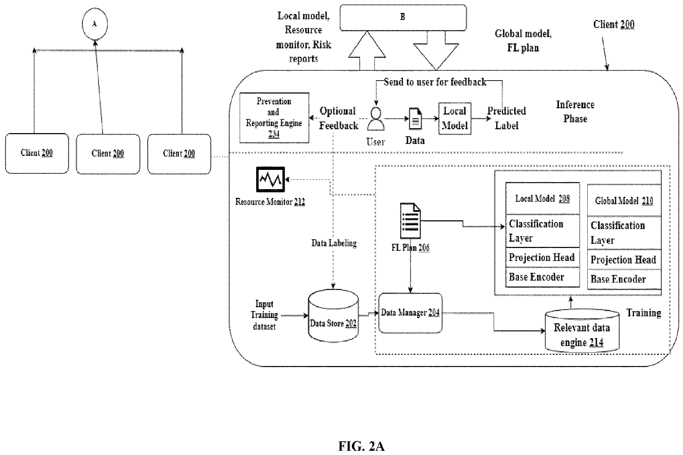

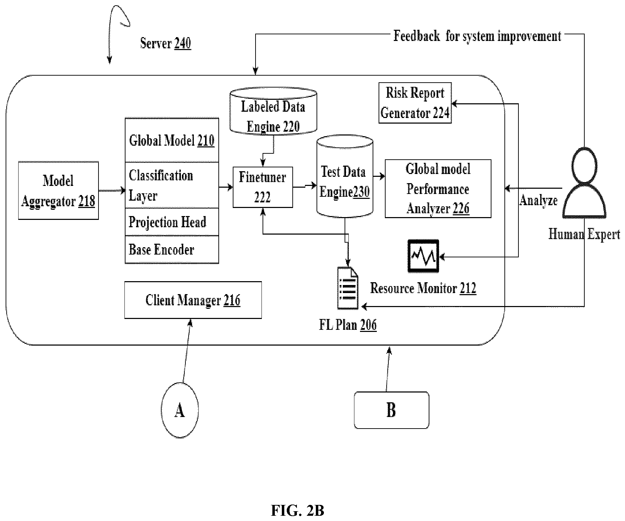

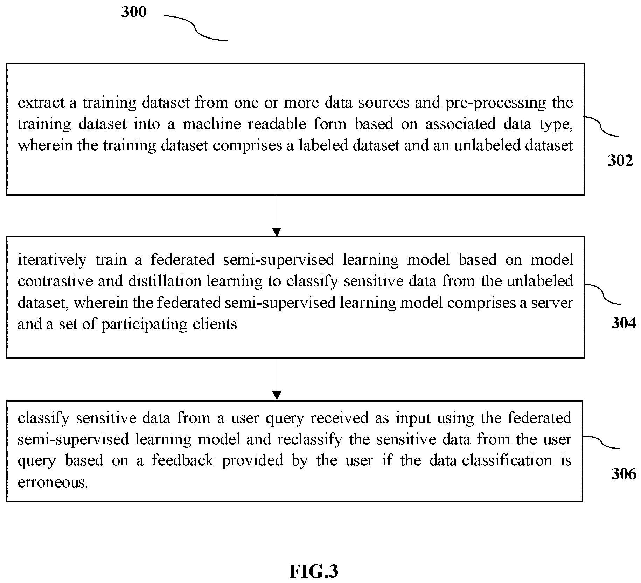

The memory 102 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. The memory 102 may comprise information pertaining to input(s)/output(s) of each step performed by the processor(s) 104 of the system 100 and methods of the present disclosure. Functions of the components of system 100, for predicting batch processes, are explained in conjunction with FIG.2A, FIG.2B and FIG.3 providing flow diagram, architectural overviews, and performance analysis of the system 100.

FIG.2A and FIG.2B illustrates an exemplary client-server architecture to classify sensitive data from the user query with feedback mechanism using the federated learning based sensitive data classification framework, in accordance with some embodiments of the present disclosure. The system 100 comprises a set of participating clients 200 and a server 240. Data communication between the server 240 and each participating client 200 is facilitated via one or more data links connecting the components to each other.

The client manager 216 of FIG.2A includes at least one participating client 200. Here, each participating client 200 comprises a data store 202, a data manager 204, a federated learning plan 206, a local model 208, a global model 210, a resource monitor 212, relevant data 214, and a prevention and reporting engine 234.

The local model 208 includes a classification layer, a base encoder, and a projection head. The global model 210 includes a classification layer, a base encoder, and a projection head. The local model 208 and the global model 210 interact with the server 240 to process queries reported by each client 200.

The server 240 of FIG.2B comprises a model aggregator 218, a global model 210, a fine tuner 222, a labeled data engine 220, a test data engine 230, the federated learning (FL) plan 206, a resource monitor 212, a risk report generator 224 which generates one or more risk reports, a global model performance analyzer 226, a client manager 216, and a human expert. The global model 210 of the server 240 includes a classification layer, a base encoder, and a projection head.

The main task of the communication is to transfer information between each of the participating client 200 and the server 240. The information may include model weights or gradients of weights, a local training procedure, a data filtering mechanism, client's system performance statistics, and thereof which is further stored in the federated learning plan 206. The server 240 generally transfers the global model weights, the local model training procedures, and the data filtering rules, whereas each client 200 generally transfers local model weights, the local model performance, and the system performance statistics, including any other important information. For ease of building the system 100, the method handles the underlying network communication such as socket programming, serialization, port establishment, serialized data transmission, and thereof.

FIG.3 illustrates an exemplary flow diagram of a method to classify sensitive data from the user query, in accordance with some embodiments of the present disclosure. In an embodiment, the system 100 comprises one or more data storage devices or the memory 102 operatively coupled to the processor(s) 104 and is configured to store instructions for execution of steps of the method 300 by the processor(s) or one or more hardware processors 104. The steps of the method 300 of the present disclosure will now be explained with reference to the components or blocks of the system 100 as depicted in FIG.1 and FIG.2, and the steps of flow diagram as depicted in FIG.3. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring now to the steps of the method 300, at step 302, the one or more hardware processors 104 extract an input dataset from one or more data sources and pre-process the training dataset into a machine readable form based on associated data type, wherein the training dataset comprises a labeled dataset and an unlabeled dataset. The data store 202 receives the training dataset as input and feeds into the data manager 204 to train a federated semi-supervised learning model (FSSL) to classify sensitive data from the unlabeled dataset. The data manager 204 of the system 100 performs data extraction which helps to remove data that is unrelated for the training as unrelated data. The main task of the data extraction module is to gather data from multiple sources that are useful for training. The collected data is then preprocessed in the data manager 204. For example, some employees within the organization have documents related to trade secrets, quarterly results, and thereof, while other may have documents of design choices, customers list, and thereof. So, depending on the work one is doing, the kind of document classes they have access to differ, which leads to uneven data distribution among employees.

The data manager 204 performs data extraction with a filtering mechanism to decide which type of data needs to be extracted. The instruction for filtering is provided by the administrator of the project. These filtering instructions are sent to all participants of the federated learning. For example, simple filtering could be selecting data with the ".pdf", ".txt" or selecting data with ".png", ".jpg", and other extensions for a training procedure. More complex instructions include giving a few templates and selecting data that lies within pre-defined or dynamically calculated boundaries in a data representation space.

The data manager 204 also performs the data type conversion as the machine learning model takes numerical inputs. Data in the image domain is generally stored in a numerical format, whereas text, graphs, and other kind of data need to be converted into a numeric data type. Depending on the type of data, the working of the pre-processor differs. Generally, for image domain, pre-processing consist of data normalization, rotation, flip, shear, crop, augmentation, color, and contrast transformations, and thereof. Performing these transformations on image data help to increase the size of dataset. These transformations are feasible in the image domain because they do not change the overall semantics of the images. The system negates the need for data augmentation and applies data normalization in the pre-processing step. For text domain, pre-processing includes 1) data cleaning steps like stop word removing, lemmatizing, stemming, 2) tokenization, 3) vectorization, and thereof.

Further, the local model 208 among the set of local models of the participating client 200 processes only unlabeled data because of the lack of domain expertise or lack of incentives. This makes it challenging to train the local model in the absence of any supervision. The system 100 utilizes the global model 210 to guide the training in two ways. One is to learn an intermediate representation of data, and the other is to learn the output representation on clients. The local model 208 is trained on each client which processes the data into batches.

Referring now to the steps of the method 300, at step 304, the one or more hardware processors 104 train a federated semi-supervised learning (FSSL) model iteratively based on model contrastive learning to classify sensitive data from the unlabeled dataset, wherein the federated semi-supervised learning model comprises a server and a set of participating clients. The client manager 216 on the server 240 selects a subset of total clients and shares the global model and federated learning plan with them. The federated learning (FL) plan 206 contains local model training instructions such as one or more epochs, a batch size, and other hyperparameters, one or more data filtering instructions, and thereof. The data manager 204 on each participating client 200 having the relevant data engine 214 selects relevant data for training. Data representation is learned on the unlabelled data selected by the data manager. The federated learning plan 206 is utilized to perform communication between the global model 210 of the server 240 and with the global model 210 of at least one participating client 200, and communication between each local model 208 among the set of local models within each participating client 200.

Federated learning collaboratively learns a global prediction model without exchanging end-user data. Let $K$ be the number of clients 200 collaborating in the learning process and R be the number of training rounds. In each round, the server first randomly selects $m$ clients ($m \subset K$) and sends a global model $\theta_g$ to them. Each participating client then trains a local model $\theta_k$ on their local dataset $D_k = \{x_1,...,x_n, N_k\}$, where $N_k = |N_k|$ is the total number of examples for the $kth$ client. Server 240 then aggregates all the local model 208 from the selected $m$ clients to obtain a global model $\theta_g = 1/N * \sum \theta_k * N_k$. Here $N = \sum N_k$. This procedure is repeated for R number of rounds or until convergence. In federated semi-supervised learning, clients 200 have unlabelled data on their device whereas server has some labelled data curated by experts.

The federated learning (FL) plan is fetched from the data manager 204 to perform model training. The FL plan 206 comprises a first set of distinctive attributes corresponding to the set of local models and a second set of distinctive attributes corresponding to the global model, wherein each local model 208 and the global model 210 includes at least one of a projection layer, a classification layer, and a base encoder. The set of local models at the set of participating clients are trained with respective unlabeled dataset based on the first set of distinctive attributes by obtaining the first set of distinctive attributes and initializing the set of local models with one or more weights. Losses occurred while training the set of local models are minimized by computing a cumulative loss based on determining a model contrastive loss and a distillation loss. The model contrastive loss (refer equation 1 and equation 2) is computed at each participating client when trained with the unlabeled dataset by considering the outputs of projection layer at current step and previous step. The distillation loss is computed by considering the outputs of classification layer of at least one of the local model and the global model. Further, each local model 208 is updated with the cumulative loss function when at least one of the global model constraints are not updated and updating the one or more weights of the set of local models.

During federated learning, relevant information communication occurs between each client 200 and the server 240. Generally, the communicated information contains model weights, labels, logits, and thereof. The method of the present disclosure has all the necessary information is bundled within the FL Plan 206. Human expert on the server 240 designs a revised federated Learning Plan (FL Plan). The revised FL plan 206 contains instructions related to the global model 210 training on the server 200 and local model 208 training on the client 200. For the global model 210 training, the FL plan 206 contains specific values for the number of training epochs, batch size, and other hyperparameters. In addition to training instructions such as epochs, batch size, and other hyperparameters, the FL plan 206 for the client 200 training also contains one or more data filtering instructions. These data filtering instructions are then passed to the data manager 204 for selecting the relevant data. The complexity of data filtering instructions depends on the task at hand. Apart from the training instruction, the FL plan 206 contains potential information that is needed for system improvement. For example, the client-server architecture can be tailored according to the client's resource specification during the first instance of participation in the training and sent back to the client during the next round of training with the help of the FL Plan 206. The model architecture-related information consists of the type of architecture to be used for example convolutional neural network, recurrent neural network, transformers, number of hidden layers and neurons, and thereof.

In one embodiment, self-supervised learning methods, such as simple framework for contrastive learning and visual representation (SimCLR) and bootstrap your own latent (BYOL), have shown good results in learning generalized data representations from unlabeled data in the vision domain. These techniques are based on contrastive learning, which is based on the idea that representations of different augmented views of the same image should be close to each other. On the other hand, the representations of different augmented views of different images should be far apart. Let $\{\tilde{x}_h\}$ be a set with positive examples $\tilde{x}_i$, and $\tilde{x}_j$ wherein the contrastive prediction task is to identify $\tilde{x}_j$, in $\{\tilde{x}_j\}h \neq i$. Furthermore, if pairs of augmented examples are derived from a randomly sampled set of H samples, then this results in 2H data points for a contrastive prediction task. The contrastive loss for any a given pair of augmentation ($x_i$, $x_j$) for a data point $x$ in the $2H$ data points will be represented in Equation 1,

$$L_{con}\left(x_i, x_j\right) = -\log \frac{\exp\left(\frac{sim\left((x_i, x_j)\right)}{\tau}\right)}{\sum_{h=1}^{2H} 1_{[h \neq i]} exp\left(\frac{sim(z_i, z_h)}{\tau}\right)}$$

--------Equation 1

Where, $z$ denotes the representation of $x$, $\tau$ is a temperature parameter, $sim(\cdot, \cdot)$ is a cosine similarity function, and $1_{[h \neq i]} \in \{0, 1\}$ is an indicator function evaluating to 1 if $h \neq i$.

The client 200 architecture of the system 100 is the self-supervised contrastive learning, wherein the projection head is added on top of a base encoder to compare the representations of two images in the projection space. The local model 208 and the global model 210 in the method of the present disclosure consists of three components: a base encoder, a projection head, and a classification layer. Let $p_\theta(\cdot)$ be the output of the projection head, and $f_\theta(\cdot)$ be the output of the classification layer.

Each local model 208 training (refer Table 1) learns a high-dimensional representation of the local data as the client has only unlabeled data. In the absence of labeled data, there is no way to guide a local training toward good data representation. The model contrastive loss is used to guide the local model 208 training and to learn generalized data representation. Given client k and an instance $x$, let $q^r = p_{\theta_k}^r(x)$ and $q^{r-1} = p_{\theta_k}^{r-1}(x)$ represent the output of the projection head of the local model training at round $r$ and $r$ - 1 respectively. Let $q_g^r$ represent the output of the projection head of the global model at round $r$. Given this, the model contrastive loss is represented in Equation 2,

$$L_c = -\log \frac{\exp\left(\frac{sim\left(q^r, q_g^r\right)}{\tau}\right)}{\exp\left(\frac{sim\left(q^r, q_g^r\right)}{\tau}\right) + \exp\left(\frac{sim\left(q^r, q^r - 1\right)}{\tau}\right)}$$

------------ Equation 2

Where, $\tau$ denotes a temperature parameter, which regulates the amount of information in a distribution. With only model contrastive loss $L_c$ for local model training and no other supervision information, the classification layer weights do not get updated. This is because the model contrastive loss $L_c$ is computed by considering the outputs of the projection layer only, which is followed by a classification layer for the class discrimination task. The global model's knowledge of the classification layer is utilized because global model weights get updated on the labeled dataset $D_s$. The global model 210 knowledge is distilled into the local model with the distillation loss is defined in Equation 3,

$$L_d = CE\left(f_{\theta_g}(x), f_{\theta_k}(x)\right)$$

-------------Equation 3

Where, $f(\cdot)$ is the output of classification layer and CE is the Cross- Entropy loss. In round $r$, for the $kth$ client, the objective is to minimize the following cumulative loss is represented in Equation 4,

$$L_k = \min_{\theta_k}{}^r E_{x \sim D_k}[L_c\left(\theta_k^r; \theta_k^{r-1}; \theta_g^r; x\right) + L_d(\theta_k^r; \theta_g^r; x)]$$

----Equation 4

Equation 4 represents the loss function which is minimized with respect to the local model parameters only.

**Table 1 – Local Model Training**

---

**Algorithm 1: Local Model Training $w^r$**

Require : Unlabeled dataset $D_k$ for client $k$, local model training rate $\eta_u$, epochs for local model training $E_u$

Ensure : Local model $\theta_k^r$

    1: Initialize $\theta_k^r \leftarrow w^r$ // initialize a local using a global model

    2: $itr \leftarrow 0$ // initialize iteration counter for training epochs, itr=0

    3: While $itr < E_u$ do // perform steps 4-7 till $itr < Eu$

    4:    for batch $b = \{x\} \epsilon \; D_k$ do // for each batch B sampled from unlabeled dataset D$_k$ perform step 5 and 6

    5:    $L_k = L_c + L_d$ // Compute loss on batch B

    6:    $\theta_k^r \leftarrow \theta_k^r - \eta_u \nabla L_k$ // update local model parameters

    7:    end for

    8:    $itr = itr + 1$ // update itr := itr + 1

    9:    end while

    10: return $\theta_k^r$ // return local model

---

Global model parameters are not updated during local model training. In the self-supervised learning, the process of not updating the global model is known as a stop-gradient operation. It has been noted that for contrastive learning, the stop-gradient operation is essential, and its removal leads to representation collapse. Similarly, the stop-gradient operation is also important in federated learning, especially when parameters are shared between two models.

Further, at the server 240 of the system 100 the global model 210 is trained with the set of local models 208 of each participating client 200 with respective labeled dataset on the server 240 based on the second set of distinctive attributes. Initially the second set of distinctive attributes are obtained, and the global model is initialized with one or more weights. The global model 210 is initialized and at least one of the participating client is randomly selected. Further, a cross-entropy loss of the global model 210 is computed from the labeled dataset for every epoch and the global model is updated based on the cross-entropy loss. Table 3 describes the overall federated training procedure of the global model at the server.

In one embodiment, server 240 of the system 100 training (Table 2) federated learning aggregates local models from each participating client 200 and then sends them back. However, in FSSL, the server first aggregates the local models of the participating client 200 to get a global model 210 $\theta_g = \frac{1}{N} * \sum_{k=1}^{m} \theta_k * N_k$. The local model is trained by using supervised cross-entropy loss on the labeled data $D_s$. Formally, update $\theta_g$ on the labeled dataset $D_s$ as represented in Equation 5,

$$L_s = min_{\theta_g} E_{(x,y)} \sim D_s \left[ CE(\theta_g; (x,y)) \right]$$

---- Equation 5

As the amount of labeled data is small, updating $\theta_g$ for a large number of epochs could lead to model overfitting. Moreover, the global model 210 tends to forget the knowledge learned from clients by updating $\theta_g$ for a large epoch. For these reasons, update $\theta_g$ for only one epoch.

**Table 2 - Server Training**

Require : Labeled dataset for server $D_s$, number of clients $k$, number of rounds $R$, global model learning rate $\eta_g$, temperature $\tau$ , epochs for global model training $E_g$

Ensure : Global model $\theta_g$

**Input:** labeled dataset $D_s$, number of rounds $R$, epochs for global model training $Eg$. **Output:** global model

1: Initialize global model $\theta_g^1$

2: $r \leftarrow 1$ // initialize iteration counter for training rounds, r = 0

3: while $r \leq R$ do // perform steps 4-14 till r < R

4: Randomly select a set of $M$ clients from $K$ // randomly select M clients

5: $S \leftarrow \{\}$ // for each client perform step 6 in parallel

6: for $k \in M$ fo Training happens in parallel for $M$ clients

7: $\theta_k^r = LocalTraining\,(\theta_g^r)$ send $\theta_g^r$ to kth clients

8: $S^k = S \cup \theta_k^r$

9: end for

10: $\theta_g^{r+1} \leftarrow \frac{1}{N} * \sum_{k=1}^{|S|} \theta_k^r * N_k$ $|S| = M$

11: $itr \leftarrow 0$ // initialize iteration counter for training epochs, itr = 0

12: while $itr < E_g$ do // perform steps 10-14 till itr < Eg

13: for batch $b = \{x, y\} \in D_s$ do // for each batch B sampled from labeled dataset $D_s$, perform step 11 and 12

14: $L_s = CrossEntropy\,(f_{\theta_g^{r+1}}(x), y)$ // compute loss on batch B

15: $\theta_g^{r+1} \leftarrow \theta_g^{r+1} - \eta_g \nabla L_s$ // update the global model parameters

16: end for

17: $r = r + 1$ // update r := r + 1

18: end while

19: $r = r + 1$

20: end while

21: return $\theta_g$ // return global model

Also, it is to be noted that the system does not pre-train $\theta_g$ on $D_s$ because this does not require pseudo-labeling. Pre-training is useful when pseudo labels are required for the local model 208 training on the client 200.

Referring now to the steps of the method 300, at step 306, the one or more hardware processors 104 classify sensitive data from a user query received as input using the federated semi-supervised learning model and reclassify the sensitive data from the user query based on a feedback provided by the user if the data classification is erroneous. The classification layer of the global model performs the output to assign a label to data instances. It is not viable to utilize major compute resources of clients and so processes data into batches at the time of inference. The classification layer suggests top-k labels that are most appropriate for a particular data instance. Here, k is an integer number, so top-1 would mean the label for which the model has the highest confidence. The value of k can be set either by clients or the server. Also, to process large data instances that cannot fit into a memory or that exceed the input length of the model and process them into chunks wherever possible.

The preventive-reporting module 234 of the client 200 processes the output of the machine learning model that classifies the data into an appropriate class. In an enterprise setup, the system of the present disclosure can be used to train a model for classifying data into security-related class. The properly labeled data would be helpful for data leak protection (DLP) solutions to apply appropriate security policy thus restricting the inappropriate data movement within and outside of the enterprise. It is noted that there could be false positives and false negatives in the ML model predictions. Clients can report the incorrect classification of the data suggested by the system. These reports are sent to the server. The experts (e.g., domain expert, subject matter expert) analyze these reports and update the class representative documents on the server.

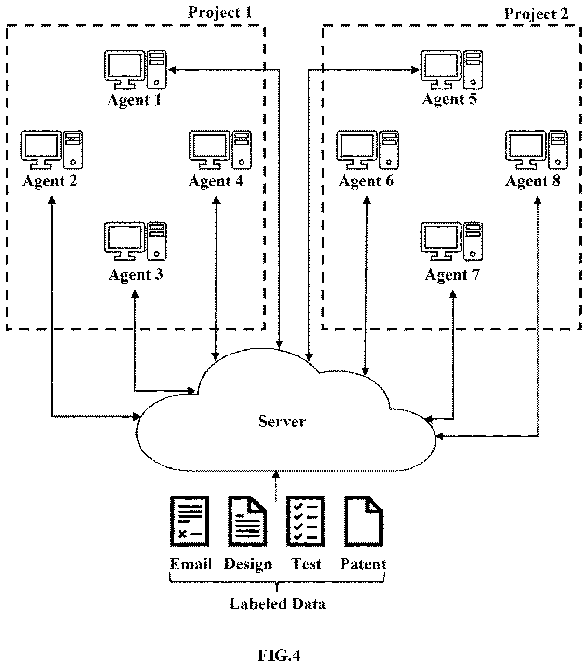

FIG.4 illustrates an exemplary enterprise scenario having labels at server using the system of FIG.1, according to some embodiments of the present disclosure. The enterprise usually handles data from multiple entities in parallel. These entities may consist of customers, vendors, partners, and employees. Similarly, the data may consist of intellectual property (IP), business processes, customer contracts, pricing, or personal information of the entity. Sensitive data at the business level is safeguarded by signing a non-disclosure agreement (NDA) with the enterprise, whereas personal data usage, storage, and processing are dictated by data privacy regulations. Any unexpected breach of the NDA or privacy regulations could lead to monetary loss (in the form of legal penalties), loss of business, and loss of reputation. Therefore, projects within a typical enterprise are isolated from each other as an avoidance measure. From information security perspective, isolation of data is problematic as enterprise will not have any insight about the sensitivity and kind of data being processed by each project.

Bloated security control inventory as the enterprise has to deploy similar security controls on all the devices (e.g., client devices) even if many of them do not have any sensitive data. This, in turn, increases the expenditure. In the event of a data breach, inability to assess the extent of the loss within the time frame specified. Higher false positives from security controls for stopping data exfiltration, as they will predominately use a rule or heuristic-based implementation. From an enterprise perspective, it is very common that the client Device has data for multiple entities, for example, employees, customers, and vendors. To illustrate, an employee from the human resources department has the personal data of other employees on their device/system (e.g., computer system). Similarly, a business relationship manager has data from various projects for prioritization and alignment with technology for maximum return on investment. Such data privacy and confidentiality issues can be generalized to other departments in the enterprise. In all these scenarios, even if the device/system (e.g., computer system) is owned by the enterprise, it still requires consent from employees to process and analyze their data. In the present disclosure, the system of FIG. 1 considers a semi-honest setting, that is, participants are honest-but-curious. This implies that the participants do not deviate from the expected benign behavior. However, they may try to learn more information than allowed by analyzing the input and output and their internal state. The method addresses the privacy issue by using federated semi-supervised learning with labels-at-server. In this setup, an agent is deployed on each device that learns a local model and shares it with an aggregating server. The customer's sensitive data never leaves the project group, so the NDA or any privacy regulation is not violated.

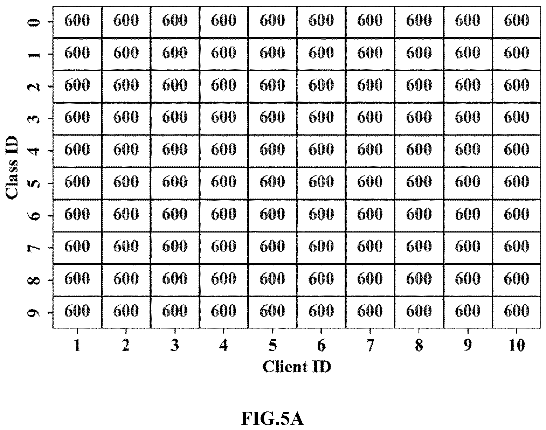

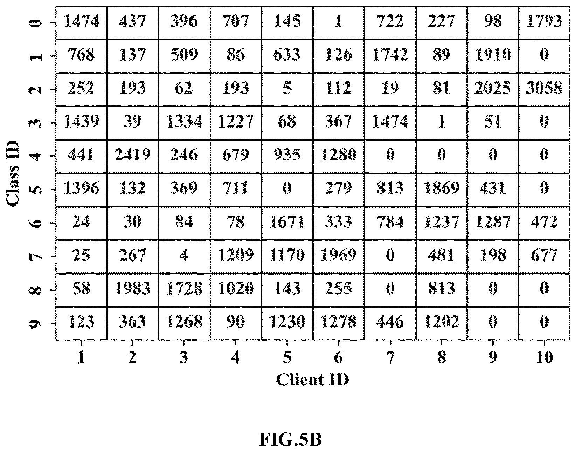

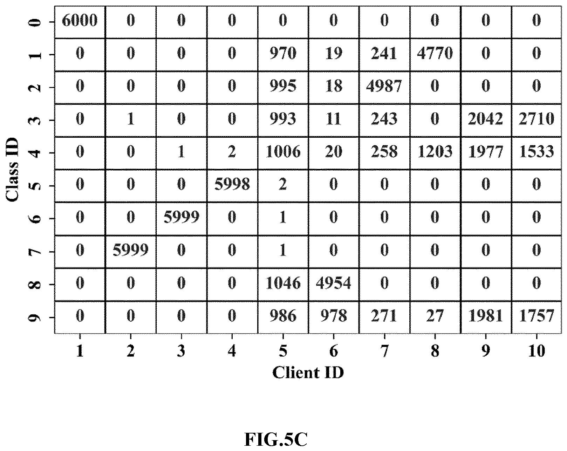

FIG.5A through FIG.5C illustrate an identical data distribution (IID) and non-independent identical data (non-IID) distribution from a Fashion-modified national institute standard technology (MNIST) dataset across ten clients with different values of alpha using the system of FIG. 1, according to some embodiments of the present disclosure. FIG.5A illustrates the IID and non-IID data distribution for the Fashion-MNIST dataset across ten clients with different values of alpha ($\alpha$). Smaller value of $\alpha$ produces more imbalanced data distribution that is, clients may not have samples for all classes, and the number of samples for a class differs too. The technique of the present disclosure is compared with existing prior arts with Canadian institute for advanced research (CIFAR-10) and Fashion-MNIST datasets. Experimental results are conducted on FiveAbstractsGroup1 and TwentyNewsGroups2 datasets to validate the general applicability of the approach to text data. The original dataset statistics are listed in Table 3,

**Table 3 - Dataset Statistics**

| Dataset | Classes | Train | Test | Type |
|---|---|---|---|---|
| **Fashion-MNIST** | 10 | 60000 | 10000 | Image |
| **CIFAR-10** | 10 | 50000 | 10000 | Image |
| **FiveAbstractsGroup** | 5 | 4958 | 1288 | Text |
| **TwentyNewGroups** | 20 | 11314 | 7532 | Text |

For non-IID setting, the existing techniques in FSSL randomly distributes the data between clients to get an imbalanced dataset. In the method of the present disclosure, the Dirichlet distribution ($\alpha$) is used to get non-IID data distribution among clients. It is noted that the data distribution will be more imbalanced for the smaller values of alpha ($\alpha$). For a better understanding of the effect of the Dirichlet distribution ($\alpha$), visualization of data distribution is shown for the Fashion-MNIST dataset. Further, experiments are conducted with various choices of $\alpha \in \{0.5, 0.1, 0.01\}$.

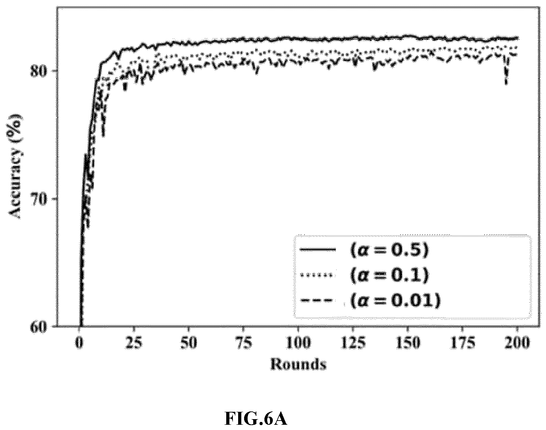

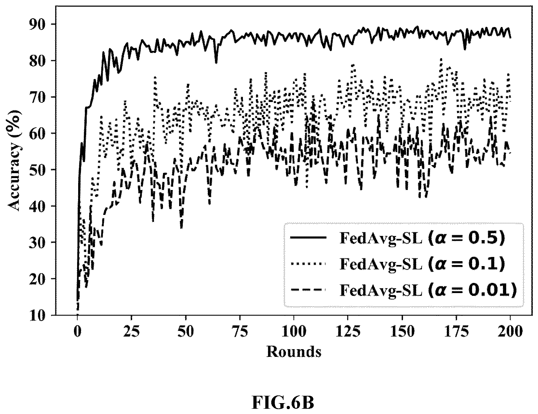

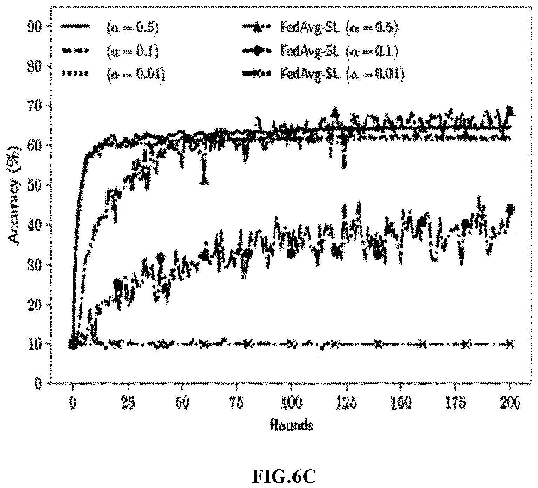

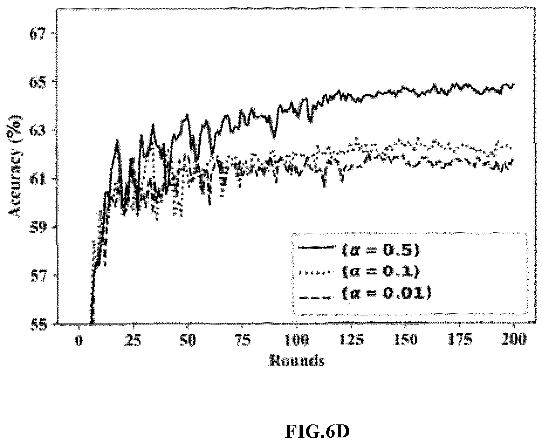

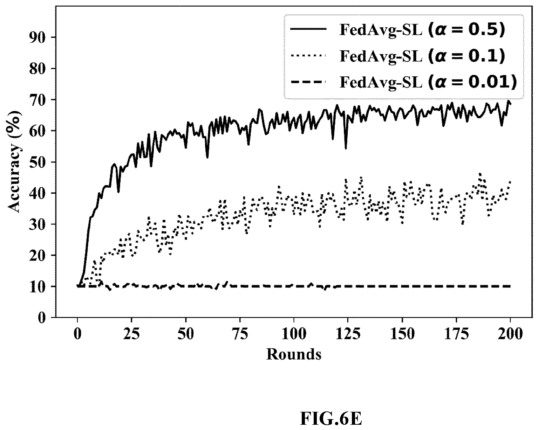

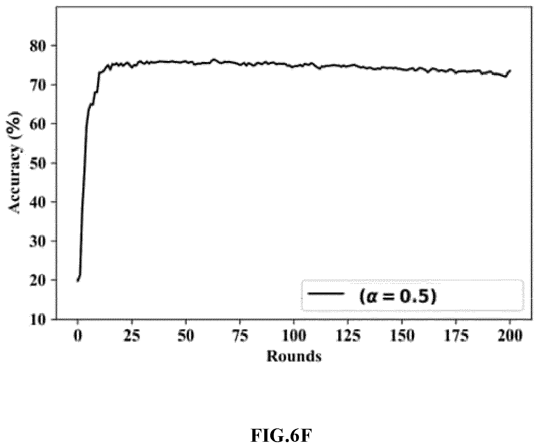

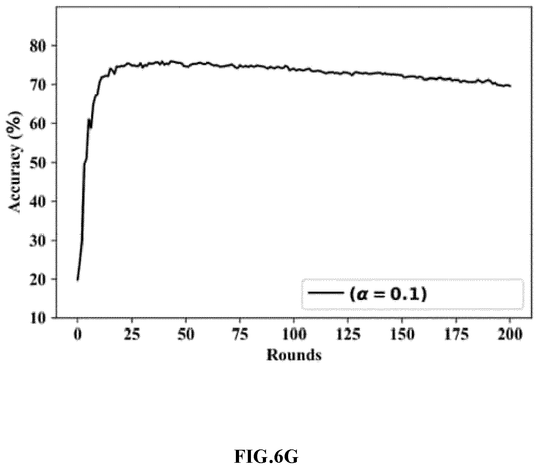

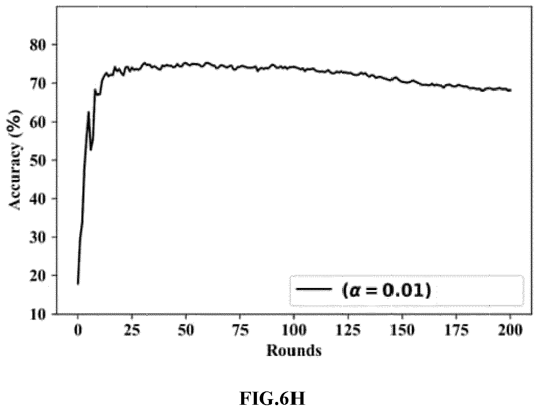

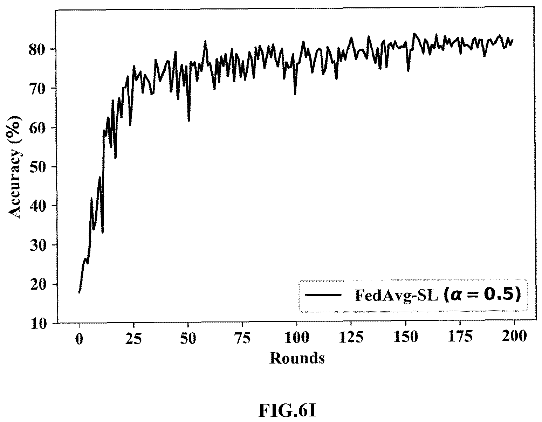

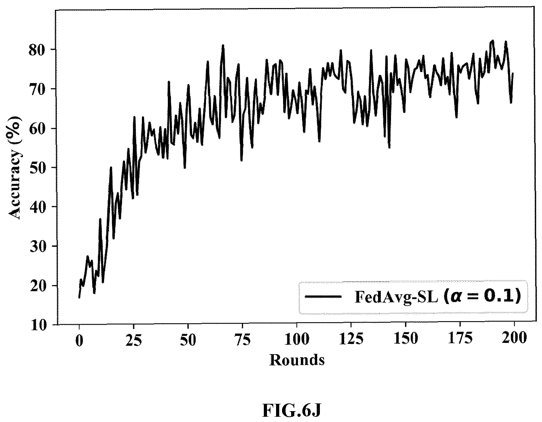

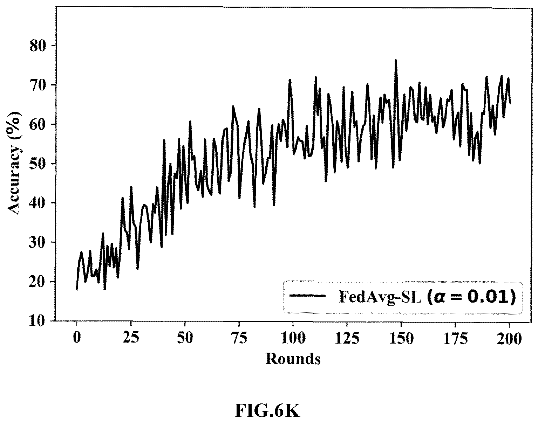

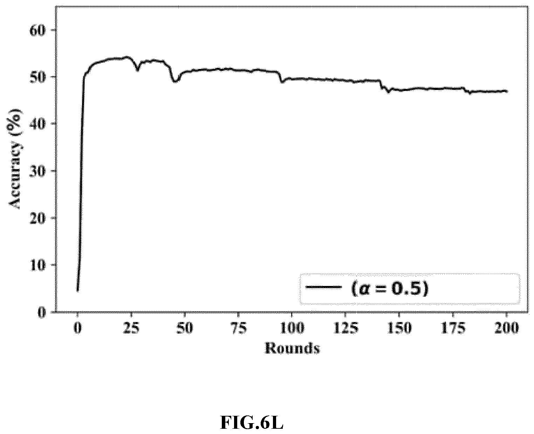

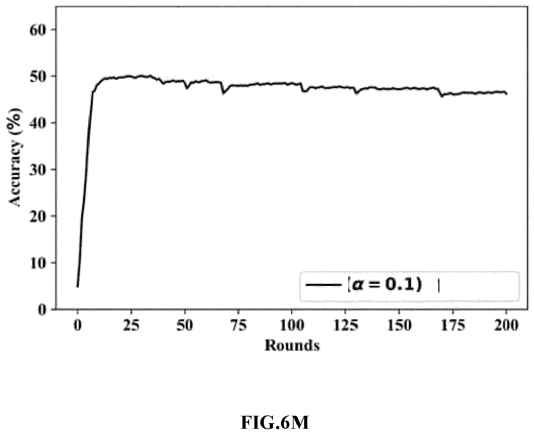

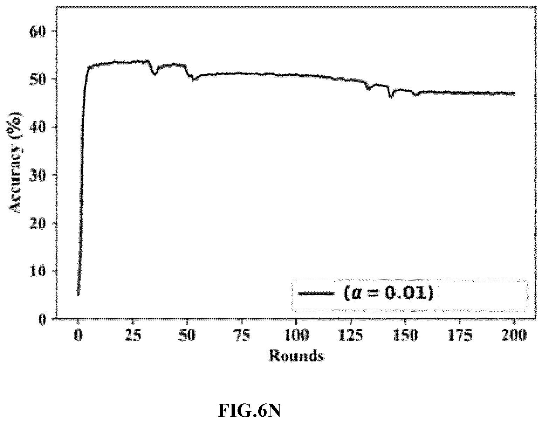

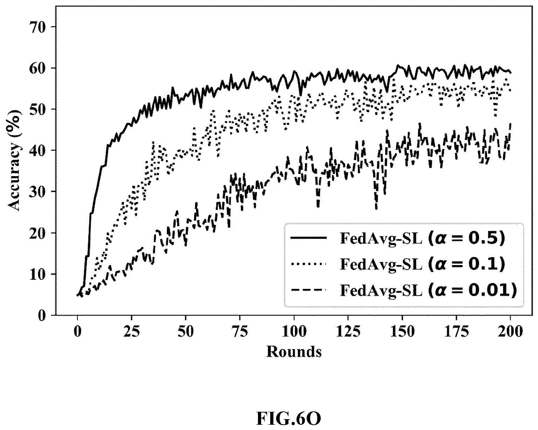

FIG.6A through FIG.6O illustrates graphical representation of accuracy between the sensitive data classification framework and conventional datasets using the system of FIG.1, according to some embodiments of the present disclosure. The graphical representation provides accuracy comparison between bedframe and FedAvg-SL for $\alpha \in \{0.5, 0.1, 0.01\}$ on four datasets. The FedAvg-SL may be alternatively referred as federated average supervised learning model. The effect of data imbalance is important to verify the model performance for various data imbalance scenarios. The effect of data imbalance by changing the $\alpha$ in the Dirichlet distribution for distributing data among clients. A smaller value of $\alpha$ produces a higher data imbalance and the results for three values of $\alpha$ = 0.5, 0.1 and 0.01. The labeled and unlabeled datasets are created by the proposed data split strategy.

In one embodiment, FIG.6A through FIG.6O provides accuracy comparison between the method of the present disclosure and the baseline (FedAvg-SL) on four datasets. The lines in the plot indicate mean accuracy, computed over three random runs of experiments. It can be observed in fluctuations for the accuracy increase for the baseline (FedAvg-SL) with the increase in data imbalance (that is, decreasing $\alpha$) for all the datasets. On the other hand, the method implemented by the system 100 is robust to data imbalance with negligible change in accuracy. It should be noted that the FedAvg-SL requires that all data on a client device be labeled. Next, the average maximum accuracies are compared by FedAvg-SL, Server-SL, and the method over three runs of experiments for $\alpha$ = 0.5, 0.1 and 0.01. For the FiveAbstractsGroup dataset, set the lower bound accuracy for the global model as 68.96 $\pm$ 1.378. This is the accuracy of the Server-SL based baseline on the FiveAbstractsGroup dataset. The number of labeled instances per class on the server as $Yc$ = 50 for the selected dataset. The method and FedAvg-SL outperform the Server-SL by achieving an accuracy of 76.55 $\pm$ 0.849. With $Y_c$=175 for the TwentyNewsGroups dataset, Server-SL and the method of the present disclosure obtained an accuracy of 51.06 $\pm$ 3.589 and 54.34 $\pm$ 1.526, respectively. FedAvg-SL performed better than both approaches, with an accuracy of 57.34 + 5.25. The method and the server-SL achieved 82.21 $\pm$ 0.566 and 79.90 $\pm$ 1.907 accuracies, as compared to 83.55 $\pm$ 10.4 for FedAvg-SL for the Fashion-MNIST dataset with $Yc$ = 50. For the CIFAR-10 dataset, Server-SL and the method of the present disclosure obtained an accuracy of 58.77 $\pm$ 1.563 and 63.53 $\pm$ 1.281, respectively. $Y_c$ was set to 500 for CIFAR-10 as per the experimental setup of FedMatch. FedAvg-SL showed the worst mean performance of 45.85 $\pm$ 23.892 when considered all values of $\alpha$ for the CIFAR-10. It can be observed, FedAvg-SL obtained 10% accuracy for $\alpha$ = 0.01 and does not improve at all during the federated training. Without considering $\alpha$ = 0.01 FedAvg-SL accuracy improves to 35%, which is still lower than the method of the present disclosure. At $\alpha$ = 0.5, FedAvg-SL performed similar to the method on the CIFAR-10 dataset. For other datasets, FedAvg-SL performed slightly better for $\alpha$ = 0.5, although a high standard deviation indicates its sensitivity towards smaller values of $\alpha$. Furthermore, the large gap between the graphs for different values of $\alpha$ demonstrates FedAvg-SL's instability with non-IID data distribution.

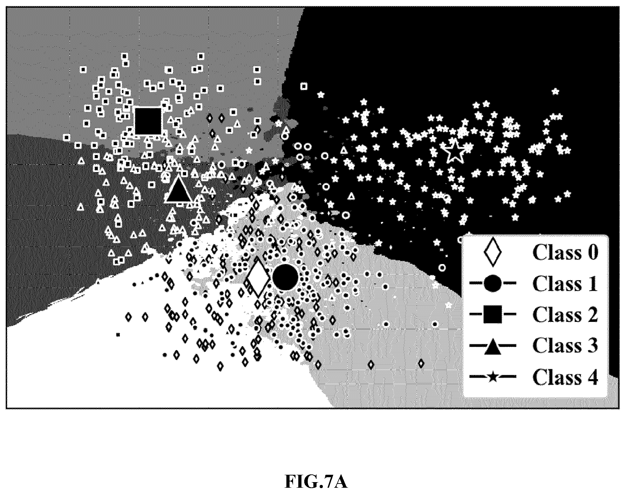

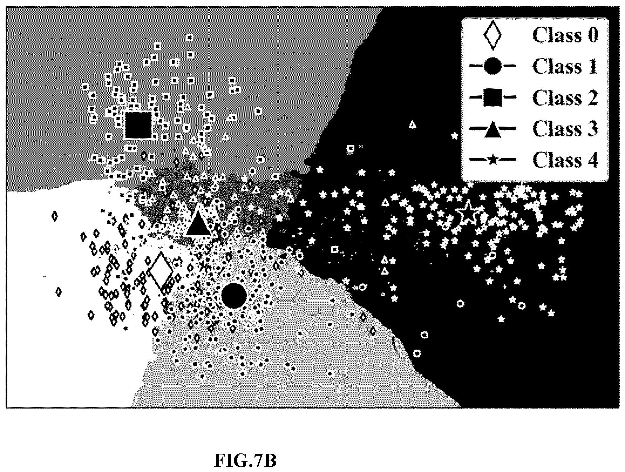

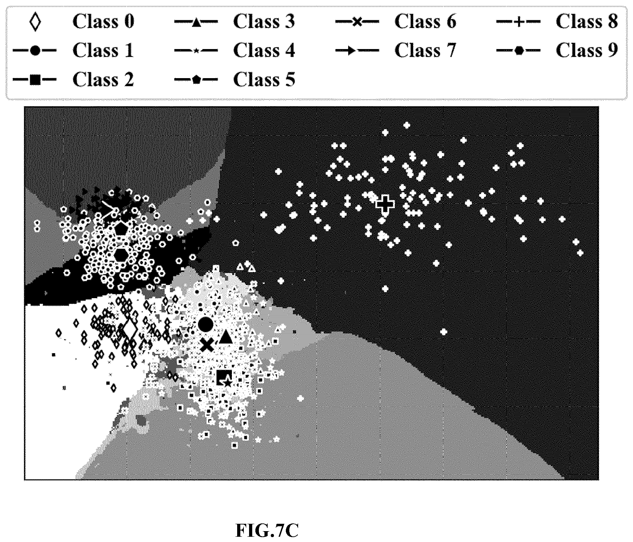

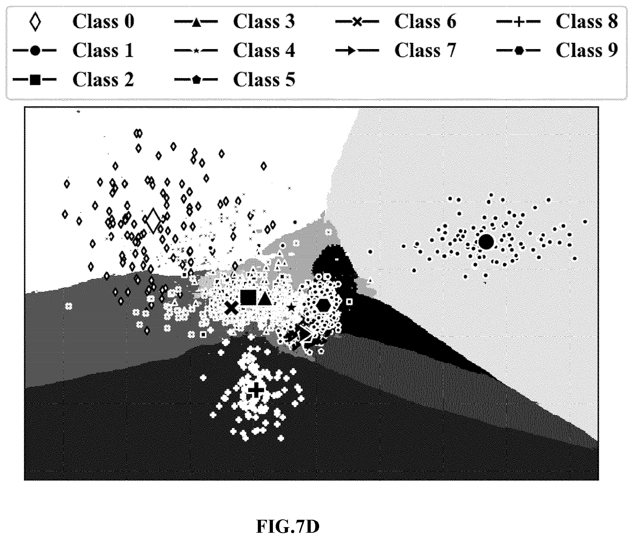

FIG.7A through 7D illustrates a global model representation for local model training performed with different loss functions using the system of FIG. 1, according to some embodiments of the present disclosure. FIG.8A illustrates principal component analysis of the global model Representation, where (a) and (b) represent local training with $L_d$ loss and $L_d + L_c$ losses, respectively, for five Abstracts Group dataset. Similarly, (c) and (d) are for Fashion-MNIST dataset. Class ID denotes the numerical values assigned to class names. The loss function for local model training on the client consists of a model contrastive loss $L_c$ (Equation 2) and a distillation loss $L_d$ (Equation 3). The system analyzed the effect of both of these loss functions on model performance and representation learning. Further, final loss $L_k$ for local model training to $L_c$ or $L_d$ but not both (Equation 4). The experimentation setting for the analysis is as follows where,

1. By setting $\alpha$ = 0.01 to replicate non-IID data distribution for a real-life scenario.
2. The number of labeled instances per class on the server was set as 75 for 5 Abstracts Group and Fashion-MNIST datasets, 525 for the CIFAR-10 dataset, and 200 for the TwentyNewsGroups dataset.

The CIFAR-10 dataset, both model contrastive and distillation losses achieved identical model performance. For the remaining datasets, better model performance with the distillation loss $L_d$ than the model trained with just model contrastive loss $L_c$ was observed. The performance gap between the models, trained with $L_d$ and $L_c$, is more prominent for the five Abstracts Group dataset. Moreover, the accuracy obtained with the distillation loss for the training has been more stable than the accuracy obtained with model contrastive loss. Also, the local model should learn better local representation in each participating round. The local models were trained for this purpose, one with just distillation loss ($L_d$) and the other by minimizing $L_k = L_d + L_c$ (Equation 4). Post training, the representations learned by the global model were compared by using these two local models. The outputs of the projection head to extract the representations. To analyze the goodness of global model representation, and its representation ability on clients' training data. The global model learns a better representation of data when local model training consists of both distillation and model contrastive loss. This can be inferred from the distinguishable cluster formations, where the ablation study shows the importance and effect of both the losses in local model training.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of classification of sensitive data. The embodiment, thus provides system and method for classification of sensitive data using federated semi-supervised learning. Moreover, the embodiments herein further provide classification of security data for better security posture for enterprise with the type of data spread on various devices. The method of the present disclosure addresses the issue of non-IID data on clients.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.


**Claims**

1. A processor implemented method (300) for classification of sensitive data using federated semi-supervised learning, comprising:

   extracting (302) via one or more hardware processors, a training dataset from one or more data sources and pre-processing the training dataset into a machine readable form based on associated data type, wherein the training dataset comprises a labeled dataset and an unlabeled dataset;
   iteratively training (304) via the one or more hardware processors, a federated semi-supervised learning model based on model contrastive and distillation learning to classify sensitive data from the unlabeled dataset, wherein the federated semi-supervised learning model comprises a server and a set of participating clients comprise:

   fetching a federated learning plan comprising a first set of distinctive attributes corresponding to the set of local models and a second set of distinctive attributes corresponding to the global model, wherein each local model and the global model includes at least one of a projection layer, a classification layer, and a base encoder;

training the set of local models at the set of participating clients with respective unlabeled dataset by using the first set of distinctive attributes associated with the federated learning plan, and communicating the plurality of trained local models to the server;

training the global model with the set of local models of each participating client with respective labeled dataset on the server by using the second set of distinctive attributes associated with the federated learning plan, and communicating the trained global model with each participating client; and

classifying (306), via the one or more hardware processors, sensitive data from a user query received as input using the federated semi-supervised learning model and reclassify the sensitive data from the user query based on a feedback provided by the user if the data classification is erroneous.

2. The processor implemented method as claimed in claim 1, wherein the first set of distinctive attributes comprises a set of training instructions and a plurality of local model constraints, wherein the plurality of local model constraints comprises at least one of a batch size, a local model learning rate, a set of hyperparameters, a total number of epochs required to train each local model, and a set of data filtering instructions.

3. The processor implemented method as claimed in claim 1, wherein the second set of distinctive attributes comprises one or more training instructions and a plurality of global model constraints, wherein the plurality of global model constraints comprises at least one of a global model learning rate, the unlabelled dataset, the set of participating clients, a total number of rounds, a temperature, and a total number of epochs required to train the global model.

4. The processor implemented method as claimed in claim 1, wherein the federated semi-supervised learning model is trained iteratively to classify sensitive class label discrimination by performing the steps of:

training the set of local models at the set of participating clients with respective unlabeled dataset based on the first set of distinctive attributes comprises:

obtaining the first set of distinctive attributes and initializing the set of local models with one or more weights; minimizing a cumulative loss occurred while training the set of local models based on computing a model contrastive loss and a distillation loss,

wherein the model contrastive loss is computed at each participating client when trained with the unlabeled dataset by considering the outputs of projection layer at current step and previous step, wherein the distillation loss is computed by considering the outputs of classification layer of at least one of the local model and the global model;

updating each local model with the cumulative loss function when at least one of the global model constraints are not updated and updating the one or more weights of the set of local models; and

training the global model with the set of local models of each participating client with respective labeled dataset on the server based on the second set of distinctive attributes comprises:

obtaining the second set of distinctive attributes and initializing the global model with one or more weights; initializing the global model and randomly selecting at least one of the participating client; computing a cross-entropy loss of the global model from the labeled dataset for every epoch; and updating the global model based on the cross-entropy loss.

5. The processor implemented method as claimed in claim 1, wherein the model contrastive loss is computed by considering outputs of projection layer for sensitive class label discrimination.

6. A system (100) for classification of sensitive data using federated semi-supervised learning, comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

extract a training dataset from one or more data sources and pre-processing the training dataset into a machine readable form based on associated data type, wherein the training dataset comprises a labeled dataset and an unlabeled dataset;

iteratively train a federated semi-supervised learning model based on model contrastive and distillation learning to classify sensitive data from the unlabeled dataset, wherein the federated semi-supervised learning model comprises a server and a set of participating clients comprise:

fetch a federated learning plan comprising a first set of distinctive attributes corresponding to the set of local models and a second set of distinctive attributes corresponding to the global model, wherein each local model and the global model includes at least one of a projection layer, a classification layer, and a base encoder;

train the set of local models at the set of participating clients with respective unlabeled dataset by using the first set of distinctive attributes associated with the federated learning plan, and communicating the plurality of trained local models to the server;

train the global model with the set of local models of each participating client with respective labeled dataset on the server by using the second set of distinctive attributes associated with the federated learning plan, and communicating the trained global model with each participating client; and

classify sensitive data from a user query received as input using the federated semi-supervised learning model and reclassify the sensitive data from the user query based on a feedback provided by the user if the data classification is erroneous.

7. The system of claim 6, wherein the first set of distinctive attributes comprises a set of training instructions and a plurality of local model constraints, wherein the plurality of local model constraints comprises at least one of a batch size, a local model learning rate, a set of hyperparameters, a total number of epochs required to train each local model, and a set of data filtering instructions.

8. The system of claim 6, wherein the second set of distinctive attributes comprises one or more training instructions and a plurality of global model constraints, wherein the plurality of global model constraints comprises at least one of a global model learning rate, the unlabelled dataset, the set of participating clients, a total number of rounds, a temperature, and a total number of epochs required to train the global model.

9. The system of claim 6, wherein the federated semi-supervised learning model is trained iteratively to classify sensitive class label discrimination by performing the steps of:

training the set of local models at the set of participating clients with respective unlabeled dataset based on the first set of distinctive attributes comprises:

obtaining the first set of distinctive attributes and initializing the set of local models with one or more weights;

minimizing a cumulative loss occurred while training the set of local models based on computing a model contrastive loss and a distillation loss,

wherein the model contrastive loss is computed at each participating client when trained with the unlabeled dataset by considering the outputs of projection layer at current step and previous step, wherein the distillation loss is computed by considering the outputs of classification layer of at least one of the local model and the global model;

updating each local model with the cumulative loss function when at least one of the global model constraints are not updated and updating the one or more weights of the set of local models; and

training the global model with the set of local models of each participating client with respective labeled dataset on the server based on the second set of distinctive attributes comprises:

obtaining the second set of distinctive attributes and initializing the global model with one or more weights;
initializing the global model and randomly selecting at least one of the participating client;
computing a cross-entropy loss of the global model from the labeled dataset for every epoch; and
updating the global model based on the cross-entropy loss.

10. The system as claimed in claim 6, wherein the model contrastive loss is computed by considering outputs of projection layer for sensitive class label discrimination.

11. One or more non-transitory machine-readable information storage mediums comprising one or more instructions which when executed by one or more hardware processors cause:

extracting a training dataset from one or more data sources and pre-processing the training dataset into a machine readable form based on associated data type, wherein the training dataset comprises a labeled dataset and an unlabeled dataset;
iteratively training via the one or more hardware processors, a federated semi-supervised learning model based on model contrastive and distillation learning to classify sensitive data from the unlabeled dataset, wherein the federated semi-supervised learning model comprises a server and a set of participating clients comprise:

fetching a federated learning plan comprising a first set of distinctive attributes corresponding to the set of local models and a second set of distinctive attributes corresponding to the global model, wherein each local model and the global model includes at least one of a projection layer, a classification layer, and a base encoder;
training, the set of local models at the set of participating clients with respective unlabeled dataset by using the first set of distinctive attributes associated with the federated learning plan, and communicating the plurality of trained local models to the server;
training the global model with the set of local models of each participating client with respective labeled dataset on the server by using the second set of distinctive attributes associated with the federated learning plan, and communicating the trained global model with each participating client; and

classifying via the one or more hardware processors, sensitive data from a user query received as input using the federated semi-supervised learning model and reclassify the sensitive data from the user query based on a feedback provided by the user if the data classification is erroneous.

12. The one or more non-transitory machine-readable information storage mediums of claim 11, wherein the first set of distinctive attributes comprises a set of training instructions and a plurality of local model constraints, wherein the plurality of local model constraints comprises at least one of a batch size, a local model learning rate, a set of hyperparameters, a total number of epochs required to train each local model, and a set of data filtering instructions.

13. The one or more non-transitory machine-readable information storage mediums of claim 11, wherein the second set of distinctive attributes comprises one or more training instructions and a plurality of global model constraints, wherein the plurality of global model constraints comprises at least one of a global model learning rate, the unlabelled dataset, the set of participating clients, a total number of rounds, a temperature, and a total number of epochs required to train the global model.

14. The one or more non-transitory machine-readable information storage mediums of claim 11, wherein the federated semi-supervised learning model is trained iteratively to classify sensitive class label discrimination by performing the steps of:

training the set of local models at the set of participating clients with respective unlabeled dataset based on the first set of distinctive attributes comprises:

obtaining the first set of distinctive attributes and initializing the set of local models with one or more weights;
minimizing a cumulative loss occurred while training the set of local models based on computing a model contrastive loss and a distillation loss,

wherein the model contrastive loss is computed at each participating client when trained with the unlabeled dataset by considering the outputs of projection layer at current step and previous step, wherein the model contrastive loss is computed by considering outputs of projection layer for sensitive class label discrimination,
wherein the distillation loss is computed by considering the outputs of classification layer of at least one of the local model and the global model;

updating each local model with the cumulative loss function when at least one of the global model constraints are not updated and updating the one or more weights of the set of local models; and

**EP 4 336 413 A1**

training the global model with the set of local models of each participating client with respective labeled dataset on the server based on the second set of distinctive attributes comprises:

obtaining the second set of distinctive attributes and initializing the global model with one or more weights;
initializing the global model and randomly selecting at least one of the participating client;
computing a cross-entropy loss of the global model from the labeled dataset for every epoch; and
updating the global model based on the cross-entropy loss.

Sensitive data classification system **100**

Hardware Processor(s) **104**

I/O Interface(s) **106**

Memory **102**

Modules **108**

**FIG. 1**

**FIG. 2A**

**FIG. 2B**

300

extract a training dataset from one or more data sources and pre-processing the training dataset into a machine readable form based on associated data type, wherein the training dataset comprises a labeled dataset and an unlabeled dataset

302

iteratively train a federated semi-supervised learning model based on model contrastive and distillation learning to classify sensitive data from the unlabeled dataset, wherein the federated semi-supervised learning model comprises a server and a set of participating clients

304

classify sensitive data from a user query received as input using the federated semi-supervised learning model and reclassify the sensitive data from the user query based on a feedback provided by the user if the data classification is erroneous.

306

FIG.3

FIG.4

**FIG.5A**

| Class ID \ Client ID | 1 | 2 | 3 | 4 | 5 | 6 | 7 | 8 | 9 | 10 |
|---|---|---|---|---|---|---|---|---|---|---|
| 0 | 1474 | 437 | 396 | 707 | 145 | 1 | 722 | 227 | 98 | 1793 |
| 1 | 768 | 137 | 509 | 86 | 633 | 126 | 1742 | 89 | 1910 | 0 |
| 2 | 252 | 193 | 62 | 193 | 5 | 112 | 19 | 81 | 2025 | 3058 |
| 3 | 1439 | 39 | 1334 | 1227 | 68 | 367 | 1474 | 1 | 51 | 0 |
| 4 | 441 | 2419 | 246 | 679 | 935 | 1280 | 0 | 0 | 0 | 0 |
| 5 | 1396 | 132 | 369 | 711 | 0 | 279 | 813 | 1869 | 431 | 0 |
| 6 | 24 | 30 | 84 | 78 | 1671 | 333 | 784 | 1237 | 1287 | 472 |
| 7 | 25 | 267 | 4 | 1209 | 1170 | 1969 | 0 | 481 | 198 | 677 |
| 8 | 58 | 1983 | 1728 | 1020 | 143 | 255 | 0 | 813 | 0 | 0 |
| 9 | 123 | 363 | 1268 | 90 | 1230 | 1278 | 446 | 1202 | 0 | 0 |

**FIG.5B**

| | 1 | 2 | 3 | 4 | 5 | 6 | 7 | 8 | 9 | 10 |
|---|---|---|---|---|---|---|---|---|---|---|
| 0 | 6000 | 0 | 0 | 0 | 0 | 0 | 0 | 0 | 0 | 0 |
| 1 | 0 | 0 | 0 | 0 | 970 | 19 | 241 | 4770 | 0 | 0 |
| 2 | 0 | 0 | 0 | 0 | 995 | 18 | 4987 | 0 | 0 | 0 |
| 3 | 0 | 1 | 0 | 0 | 993 | 11 | 243 | 0 | 2042 | 2710 |
| 4 | 0 | 0 | 1 | 2 | 1006 | 20 | 258 | 1203 | 1977 | 1533 |
| 5 | 0 | 0 | 0 | 5998 | 2 | 0 | 0 | 0 | 0 | 0 |
| 6 | 0 | 0 | 5999 | 0 | 1 | 0 | 0 | 0 | 0 | 0 |
| 7 | 0 | 5999 | 0 | 0 | 1 | 0 | 0 | 0 | 0 | 0 |
| 8 | 0 | 0 | 0 | 0 | 1046 | 4954 | 0 | 0 | 0 | 0 |
| 9 | 0 | 0 | 0 | 0 | 986 | 978 | 271 | 27 | 1981 | 1757 |

Class ID (rows) / Client ID (columns)

**FIG.5C**

24

**FIG.6A**

**FIG.6B**

**FIG.6C**

**FIG.6D**

FIG.6E

**FIG.6F**

**FIG.6G**

**FIG.6H**

**FIG.6I**

**FIG.6J**

**FIG.6K**

**FIG.6L**

**FIG.6M**

**FIG.6N**

**FIG.6O**

**FIG.7A**

**FIG.7B**

FIG.7C

**FIG.7D**

Europäisches Patentamt
European Patent Office
Office européen des brevets

# EUROPEAN SEARCH REPORT

Application Number

**EP 23 19 2307**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/270590 A1 (BEAUFAYS FRANÇOISE [US] ET AL) 25 August 2022 (2022-08-25) * paragraphs [0002] - [0014], [0026] - [0028], [0040] - [0046], [0062], [0067], [0083]; claim 17 * ----- | 1-14 | INV. G06N3/0895 G06N3/098 |
| X | EP 3 940 604 A1 (NOKIA TECHNOLOGIES OY [FI]) 19 January 2022 (2022-01-19) * paragraphs [0032] - [0047] * ----- | 1,6,11 | |

TECHNICAL FIELDS SEARCHED (IPC)

G06N

The present search report has been drawn up for all claims

| Place of search | Date of completion of the search | Examiner |
|---|---|---|
| The Hague | 30 January 2024 | Bykowski, Artur |

EPO FORM 1503 03.82 (P04C01)

## ANNEX TO THE EUROPEAN SEARCH REPORT
## ON EUROPEAN PATENT APPLICATION NO.

EP 23 19 2307

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2024

| Patent document cited in search report | | Publication date | Patent family member(s) | | Publication date |
|---|---|---|---|---|---|
| US 2022270590 | A1 | 25-08-2022 | CN | 116134453 A | 16-05-2023 |
| | | | EP | 3963511 A1 | 09-03-2022 |
| | | | US | 2022270590 A1 | 25-08-2022 |
| | | | WO | 2022019885 A1 | 27-01-2022 |
| EP 3940604 | A1 | 19-01-2022 | EP | 3940604 A1 | 19-01-2022 |
| | | | US | 2022012637 A1 | 13-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202221050218